# FASCICULE DE BREVET EUROPEEN

(11) **EP 3 415 779 B1**
(45) Date de publication et mention de la délivrance du brevet: **06.04.2022**
(21) Numéro de dépôt: 18173350.2
(22) Date de dépôt: 18.05.2018
(51) Int. Cl.: F16D 48/02

(54) **ACTIONNEUR DE COMMANDE D'EMBRAYAGE**
BETÄTIGUNGSELEMENT FÜR KUPPLUNGSSTEUERUNG
CLUTCH CONTROL ACTUATOR

(30) Priorité: 16.06.2017 FR 1755517
(43) Date de publication de la demande: 19.12.2018
(73) Titulaire: Renault s.a.s, 92100 Boulogne Billancourt (FR)
(72) Inventeur: SAMMUT, Emilie, 91510 LARDY (FR); FAGUET, Gilles, 95550 BESSANCOURT (FR)
(74) Mandataire: Renault Group

(56) Documents cités:
- DE-A1- 3 827 724
- DE-A1- 19 811 337
- DE-A1-102008 058 674
- DE-A1-102011 003 042
- FR-A1- 2 820 468

## Description

La présente invention se rapporte à la commande hydraulique des embrayages.

Elle a pour objet un dispositif de commande d'embrayage comportant une pédale de débrayage, un émetteur de pression hydraulique, un récepteur hydraulique de manœuvre d'embrayage, et un actionneur de commande, disposé dans le circuit de commande de l'embrayage entre l'émetteur et le récepteur.

La chaîne cinématique d'un véhicule doit être protégée contre des reprises de couple trop brutales en phase de ré-embrayage, lors de la fermeture de l'embrayage qui se trouve en amont de la boite de vitesses.

Pour limiter l'impact des à-coups de couple liés aux réembrayages trop rapides sur la chaîne cinématique, il existe des limiteurs de débit, appelés « *limiteurs de pointe de couple* », (PTL pour « *Peak Torque Limiter »* en anglais), qu'on peut placer dans le circuit hydraulique, entre la pédale et l'embrayage. La fonction du limiteur de débit est de ralentir la fermeture de l'embrayage en cas de relâchement brutal de la pédale. Un tel système est décrit dans la publication DE 10 2008 058 674.

DE 10 2011 003042 A1 divulgue un système de mise en route de véhicule pour commander la mise en route automatique d'une chaîne de traction de véhicule.

DE 38 27 724 A1 divulgue un dispositif de sécurité disposé sur une commande hydraulique d'embrayage, présentant en parallèle une première voie avec une soupape de sécurité anti-retour, et une deuxième voie avec un clapet magnétique de réglage pouvant limiter le passage du fluide.

Certains véhicules bénéficient par ailleurs de fonctionnalités d'assistance à la conduite particulières, telles que les fonctions roue libre dénommées « *coasting* » ou *« sailing* », prévoyant dans certaines conditions de roulage une ouverture automatique de la chaîne cinématique du véhicule au niveau de l'embrayage d'entrée de la boîte, et une coupure momentanée du moteur pour réduire la consommation de carburant. Un actionneur piloté, intégré dans le circuit de commande hydraulique de l'embrayage, impose son fonctionnement à ce circuit, lorsque les conditions d'activation de la fonction roue libre sont réunies.

Il reste cependant nécessaire de protéger la chaîne cinématique du véhicule, contre des reprises de couples trop brutales causées par un brusque relâchement de la pédale de débrayage par le conducteur.

La présente invention a pour but d'assurer cette protection, pour un embrayage placé simultanément sous la commande d'un actionneur piloté, et d'une pédale de débrayage.

Dans ce but, l'invention présente un dispositif de commande d'embrayage selon la revendication 1.

Conformément à l'invention, ce dispositif comprend un actionneur dispose d'un premier mode de fonctionnement, où le fluide traverse uniquement la conduite principale de passage, et d'un deuxième mode de fonctionnement, où il traverse la dérivation.

L'actionneur est disposé dans le circuit de commande de l'embrayage, entre l'émetteur et le récepteur hydraulique.

Le dispositif de commande d'embrayage proposé est placé sous le double contrôle d'une unité de calcul qui pilote l'actionneur dans un mode de fonctionnement autorisant l'ouverture automatique de l'embrayage dans certaines circonstances, et de la pédale de débrayage du conducteur.

Les avantages principaux de l'invention, sont de diminuer l'encombrement global de la commande d'embrayage, de réduire son coût global, et d'améliorer les prestations de l'embrayage.

La présente invention sera mieux comprise à la lecture de la description suivante d'un mode de réalisation non limitatif de celle-ci, en se reportant aux dessins annexés, sur lesquels :
- la figure 1 est un schéma d'ensemble d'un dispositif de commande d'embrayage,
- les figures 2A, 2B, 2C montrent l'intégration d'un limiteur de débit dans un actionneur, et ses positions de fonctionnement, et
- la figure 3 montre le clapet mobile du limiteur de débit.

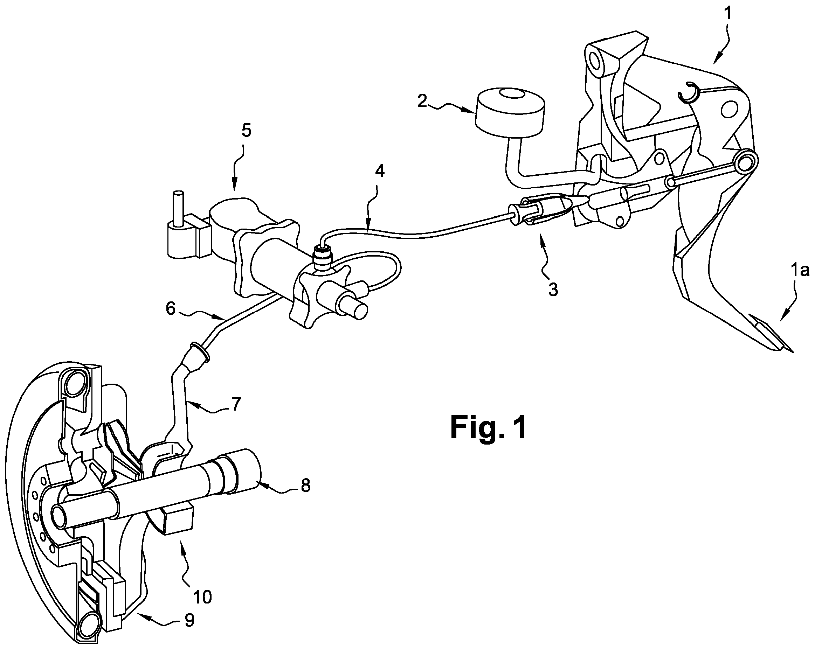

Sur la figure 1, on reconnaît un pédalier de véhicule 1, avec une pédale de débrayage la. Le réservoir de fluide fonctionnel 2 est par exemple commun avec le circuit de freinage (non représenté) du véhicule. Il alimente l'émetteur de pression hydraulique 3. L'émetteur 3 est raccordé par le tuyau de commande amont 4 à un actionneur 5. L'actionneur 5 est disposé dans le circuit hydraulique de commande de l'embrayage 9, entre l'émetteur de pression 3 et le récepteur hydraulique 10, de manœuvre d'embrayage. L'actionneur 5 est raccordé au récepteur hydraulique 10 par un tuyau de commande aval 6.

Le récepteur hydraulique 10 est par exemple une commande cylindrique du type CSC (pour « *Concentric Slave cylinder* »)*.* Sont également représentés sur le schéma, l'arbre primaire 8 de la boîte, et l'embrayage 9. Enfin, un amortisseur hydraulique (ou « *Damper »)* (non représenté) peut aussi être intégré au circuit, en fonction des applications visées.

L'actionneur 5 représenté sur les figures, présente une conduite principale 12 de passage de fluide à débit constant, et une conduite de dérivation 12a à partir de la conduite principale 12. La conduite principale 12 et la dérivation 12a s'étendent à l'intérieur de celui-ci, et se réunissent avant la sortie du fluide dans l'actionneur en direction de l'émetteur 3 ou du récepteur 10. Conformément à l'invention, la dérivation 12a intègre un limiteur de débit 11, qui obture partiellement le passage du fluide en retour du récepteur 10 vers l'émetteur 3, lors d'une fermeture brusque de l'embrayage 9.

L'actionneur permet d'ouvrir la chaîne cinématique en soumettant la butée hydraulique du récepteur 10, à la pression de l'émetteur, pour désaccoupler le moteur de la boîte de vitesses. Il est piloté par une unité de commande du véhicule. Il répond aux définitions techniques nécessaires à la mise en œuvre de la fonction d'ouverture automatique d'embrayage dite *« e-clutch* » pour réaliser les phases de « *sailing* » ou de *« coasting* », lorsque les conditions de conduite le permettent. L'actionneur 5 permet également d'ouvrir l'embrayage 9 sous la commande directe du conducteur à partir de la pédale de débrayage la.

L'actionneur dispose d'un premier mode de fonctionnement, où le fluide traverse uniquement la conduite principale de passage 12, et d'un deuxième mode de fonctionnement, où le fluide traverse la dérivation 12a. Le premier mode de fonctionnement est de préférence un mode automatique, piloté par une unité de commande, alors que le deuxième mode s'impose au premier, lorsque le conducteur agit sur sa pédale de débrayage la.

Le dispositif de commande d'embrayage proposé est ainsi placé sous le double contrôle d'une unité de commande qui pilote l'actionneur dans un mode de fonctionnement autorisant l'ouverture automatique de l'embrayage dans certaines circonstances, et de la pédale de débrayage.

L'invention propose d'intégrer à l'actionneur un limiteur de débit 11 assurant la fonction limiteur de pic de couple (PTL pour « Peak Torque Limiter »), de manière à limiter les pics de couple dans la chaîne cinématique lors de lâchés de pied accidentels de la pédale d'embrayage ou bien de remontée de pédale trop rapide.

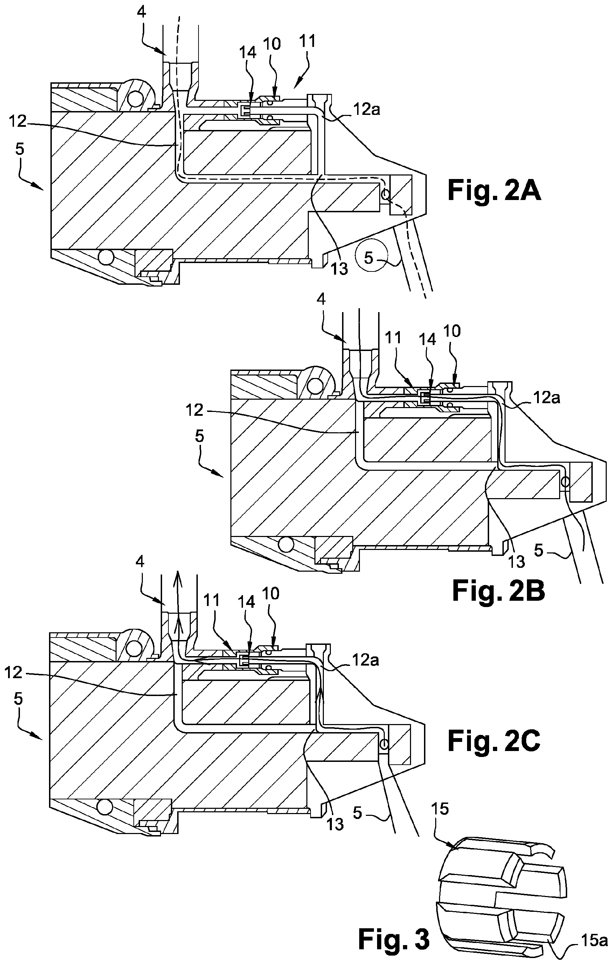

Le limiteur de débit 11 est représenté sur les figures 2A à 2C. Il est intégré à l'actionneur 5. Il est placé dans une branche de dérivation 12a du conduit principal 12, empruntée par le fluide hydraulique au travers de l'actionneur entre le tuyau amont 4 et le tuyau aval 6. Lorsque l'embrayage est actionné par une unité de commande du véhicule, le fluide se déplace au travers du conduit principal (figure 2A). Lorsque l'embrayage est actionné par la pédale la, le fluide se déplace au travers de la dérivation 12a. La circulation peut être interrompue au travers de la conduite principale 12, ou de la dérivation, par exemple au niveau de leur jonction 13. En résumé, le fluide hydraulique traverse l'actionneur 5 au travers de sa conduite principale 12 pour l'ouverture et la fermeture automatique de l'embrayage, et au travers de sa conduite de dérivation 12a lors de l'actionnement ou du relâchement de la pédale de débrayage la.

Le limiteur de débit 11 comprend une cuvette d'appui intérieur fixe 14, du côté du récepteur 10, et un clapet d'obturation mobile 15 entre une première position d'appui contre le bouchon 14, où il ne limite pas le passage du fluide, et une deuxième position de placage du côté opposé au bouchon 14, où il limite le débit de retour de fluide vers l'émetteur 3.

Lors d'une opération de débrayage (figure 2A) ou de ré-embrayage normal (remontée de pédale lente), le clapet 15 est plaqué contre la cuvette 14, du côté du récepteur 10, par la pression du fluide de commande (par exemple le liquide de frein du véhicule). Le fluide passe à la fois au centre du clapet et entre ses nervures extérieures 15a, mises en évidence sur la figure 3 : il transite normalement à l'intérieur du limiteur 11, en direction du récepteur 10 (débrayage), ou en retour vers l'émetteur 3 (ré embrayage), au travers de la plus large section du clapet 15.

Lors d'un retour de pédale de débrayage vers sa position haute, le clapet 15 se déplace vers la gauche (figure 2C), par exemple si le débit est supérieur à l'effort d'un ressort de tarage (non représenté sur les schémas). Le clapet 15 est alors plaqué du côté de l'émetteur 3. Dans cette situation, le fluide passe uniquement dans une section réduite du clapet 15 : son débit est réduit à l'intérieur de l'actionneur 5 par le limiteur intégré 11, lors d'une fermeture brusque de l'embrayage 9. Le reflux vers l'émetteur 3 est limité, et la remontée de la pédale est ralentie. Lors d'un ré-embrayage brutal, par exemple par relâchement brusque de la pédale, la manœuvre d'embrayage est amortie grâce au limiteur 11. Les pointes de couple sont évitées. Lorsque les conditions l'imposent, le limiteur limite le débit de retour du fluide, pour protéger la chaîne cinématique.

Le limiteur de débit se présente comme un ajutage particulier, intégré dans une dérivation de l'actionneur. L'actionneur reste compact, et facile à implanter dans l'environnement du véhicule. En conclusion, l'intégration proposée, n'induit ni modification lourde de l'actionneur, ni adaptation de forme, susceptible d'impacter son implantation. Le coût pour l'intégration du limiteur de débit dans l'actionneur reste modeste, dans la mesure où il suffit de modifier un passage de fluide préexistant, pour mettre en place un ajutage. Sa mise en œuvre est aisée. Le coût global de la fonction est d'autant plus faible, que le limiteur peut être réalisé directement par moulage dans le nez de l'actionneur.

## Revendications

1. Dispositif de commande d'embrayage comportant un actionneur de commande d'embrayage (5) disposé dans un circuit hydraulique de commande d'embrayage (9) de véhicule entre un émetteur de pression (3) et un récepteur hydraulique, une unité de calcul qui pilote l'actionneur (5) dans un mode de fonctionnement autorisant l'ouverture automatique de l'embrayage dans certaines circonstances, et une pédale de débrayage (la), **caractérisé en ce que** l'actionneur (5) présente une conduite principale (12) de passage de fluide à débit constant pour l'ouverture et la fermeture automatique de l'embrayage dans un premier mode de fonctionnement automatique piloté où le fluide traverse uniquement cette conduite principale, et une conduite de dérivation (12a) à partir de la conduite principale, traversée par le fluide dans un deuxième mode de fonctionnement établi lorsque le conducteur agit sur sa pédale de débrayage, qui intègre un limiteur de débit (11) obturant partiellement le passage du fluide en retour du récepteur (10) vers l'émetteur (3), lors d'une fermeture brusque de l'embrayage, le limiteur (11) comprenant un bouchon d'appui intérieur fixe (14) du côté du récepteur (10), et un clapet d'obturation mobile (15) entre une première position d'appui contre le bouchon (14), où il n'obture pas le passage du fluide et une deuxième position de placage du côté opposé au bouchon (14), où il limite le débit de retour de fluide vers l'émetteur (3).

2. Dispositif de commande d'embrayage selon la revendication l, **caractérisé en ce que** la conduite principale (12) et la dérivation (12a) s'étendent à l'intérieur de l'actionneur, et se réunissent avant la sortie du fluide en direction de l'émetteur (3) et du récepteur (10).

3. Procédé de commande hydraulique d'un embrayage de véhicule, par un dispositif de commande selon l'une des revendications 1 à 4, **caractérisé en ce que** le fluide hydraulique traverse l'actionneur (5) au travers de sa conduite principale (12) lors de l'ouverture et de la fermeture automatique de l'embrayage, et au travers de sa conduite de dérivation (12a) lors de l'actionnement de la pédale de débrayage (la).

4. Procédé de commande hydraulique selon la revendication 5, **caractérisé en ce que** le débit du fluide est réduit par le limiteur de débit (11) à l'intérieur de l'actionneur (5), lors d'une fermeture brusque de l'embrayage(9).

## Patentansprüche

1. Kupplungssteuerungsvorrichtung aufweisend ein Betätigungselement für eine Kupplungssteuerung (5), das in einem Hydraulikkreis einer Kupplungssteuerung (9) eines Fahrzeugs zwischen einem Druckgeber (3) und einem hydraulischen Empfänger angeordnet ist, eine Recheneinheit, die das Betätigungselement (5) in einem Betriebsmodus steuert, der die automatische Öffnung der Kupplung unter bestimmten Umständen gestattet, und ein Auskupplungspedal (1a), **dadurch gekennzeichnet, dass** das Betätigungselement (5) eine Hauptleitung (12) zum Durchfluss von Fluid mit konstantem Durchsatz zum automatischen Öffnen und Schließen der Kupplung in einem ersten gesteuerten automatischen Betriebsmodus, in dem das Fluid nur diese Hauptleitung durchströmt, und eine Umgehungsleitung (12a) ausgehend von der Hauptleitung aufweist, die vom Fluid in einem zweiten Betriebsmodus durchströmt wird, der hergestellt wird, wenn der Fahrer auf sein Auskupplungspedal wirkt, die einen Durchflussbegrenzer (11) aufweist, der den Durchlass des Fluids auf dem Rückweg vom Empfänger (10) zum Geber (3) bei einem plötzlichen Schließen der Kupplung teilweise verschließt, wobei der Begrenzer (11) einen festen inneren Anlagestopfen (14) auf der Seite des Empfängers (10) und eine Verschlussklappe (15), die zwischen einer ersten Anlageposition an dem Stopfen (14), in der sie den Durchlass des Fluids nicht verschließt, und einer zweiten Anpressposition auf der Seite gegenüber dem Stopfen (14) beweglich ist, in der sie den Fluidrückflussdurchsatz zum Geber (3) begrenzt, umfasst.

2. Kupplungssteuerungsvorrichtung nach Anspruch 1, **dadurch gekennzeichnet, dass** sich die Hauptleitung (12) und die Umgehung (12a) innerhalb des Betätigungselements erstrecken und vor dem Austritt des Fluids in Richtung des Gebers (3) und des Empfängers (10) zusammenlaufen.

3. Hydraulisches Steuerungsverfahren einer Fahrzeugkupplung durch eine Steuerungsvorrichtung nach einem der Ansprüche 1 bis 4, **dadurch gekennzeichnet, dass** das Hydraulikfluid das Betätigungselement (5) durch dessen Hauptleitung (12) beim automatischen Öffnen und Schließen der Kupplung und durch dessen Umgehungsleitung (12a) bei der Betätigung des Auskupplungspedals (1a) durchströmt.

4. Hydraulisches Steuerungsverfahren nach Anspruch 5, **dadurch gekennzeichnet, dass** der Durchsatz des Fluids vom Durchflussbegrenzer (11) innerhalb des Betätigungselements (5) bei einem plötzlichen Schließen der Kupplung (9) begrenzt wird.

## Claims

1. Clutch control device comprising a clutch control actuator (5) arranged in a hydraulic circuit for controlling a clutch (9) of a vehicle between a pressure emitter (3) and a hydraulic receiver, a processing unit which controls the actuator (5) in a mode of operation that allows automatic opening of the clutch in certain circumstances, and a clutch pedal (1a), **characterized in that** the actuator (5) has a main duct (12) for passing fluid at a constant flow rate in order to automatically open and close the clutch in a first, automatically operated, mode of operation in which the fluid passes only along this main duct, and a bypass duct (12a) tapped off the main duct, and through which the fluid passes in a second mode of operation which is established when a driver acts on their clutch pedal, which incorporates a flow limiter (11) partially blocking the passage of fluid returning from the receiver (10) towards the emitter (3), upon abrupt closure of the clutch, the limiter (11) comprising fixed interior bearing stopper (14) on the side of the receiver (10), and a mobile shut-off shutter (15) able to move between a first position bearing against the stopper (14), in which it does not shut off the passage of the fluid and a second position pressed to the opposite side to the stopper (14), where it limits the return flow of fluid towards the emitter (3).

2. Clutch control device according to Claim 1, **characterized in that** the main duct (12) and the branched bypass (12a) extend inside the actuator and meet before the fluid exits towards the emitter (3) and the receiver (10) .

3. Method for the hydraulic control of a vehicle clutch by a control device according to one of Claims 1 to 4, **characterized in that** the hydraulic fluid passes through the actuator (5) along its main duct (12) when the clutch is being opened and closed automatically, and along its bypass duct (12a) when the clutch pedal (1a) is actuated.

4. Hydraulic control method according to Claim 5, **characterized in that** the fluid flow rate is reduced by the flow limiter (11) inside the actuator (5) when the clutch (9) is closed abruptly.
